# EUROPÄISCHE PATENTSCHRIFT

(11) **EP 4 208 123 B1**
(45) Veröffentlichungstag und Bekanntmachung des Hinweises auf die Patenterteilung: **17.12.2025**
(21) Anmeldenummer: 21769744.0
(22) Anmeldetag: 31.08.2021
(51) Int. Cl.: B33Y 10/00, B33Y 80/00

(54) **VERFAHREN ZUR HERSTELLUNG EINES ZUR MONTAGE IN EINEN ARTIKULATOR BESTIMMTEN KIEFERMODELLS**
METHOD FOR PRODUCING A JAW MODEL INTENDED FOR MOUNTING IN AN ARTICULATOR
PROCÉDÉ DE FABRICATION D'UN MODÈLE DE MÂCHOIRE DESTINÉ À ÊTRE MONTÉ DANS UN ARTICULATEUR

(30) Priorität: 04.09.2020 DE 102020123200; 15.01.2021 DE 102021100797
(43) Veröffentlichungstag der Anmeldung: 12.07.2023
(73) Patentinhaber: SHERA Werkstoff-Technologie GmbH, 49448 Lemförde (DE)
(72) Erfinder: SIEKER, Guido, 32312 Lübbecke (DE)
(74) Vertreter: Duda, Rafael Thomas
(86) Internationale Anmeldenummer: PCT/EP2021/074037
(87) Internationale Veröffentlichungsnummer: WO 2022/049078

(56) Entgegenhaltungen:
- EP-A1- 3 892 232
- DE-A1- 102011 014 504
- DE-A1- 102011 057 029
- DE-A1- 102017 002 618
- DE-A1- 19 914 705
- US-A1- 2020 100 878

## Beschreibung

Die vorliegende Erfindung betrifft ein Verfahren gemäß Anspruch 1 sowie ein nach diesem Verfahren hergestelltes, in einen Artikulator einsetzbares Kiefermodell.

### Stand der Technik

Die Arbeitsgrundlage einer jeden zahntechnischen Arbeit ist die Abformung des Patientenkiefers. Diese Abformung erfolgt in jüngerer Zeit vermehrt mittels eines intraoralen Scanners. Die digitalen Kiefermodelle (Unter- und Oberkiefer) des Patienten werden nun mittels CAD-Software so aufbereitet, dass sie mittels additiver oder subtraktiver Verfahren hergestellt werden können. Das Zahnlabor hat so das physische Modell des Patienten und kann dieses als Arbeitsgrundlage verwenden. Damit die Kaubewegungen bzw. Kieferbewegungen nachgestellt werden können, werden die Modelle in einen Artikulator einartikuliert. Dies geschieht mit Zuhilfenahme von Gips. Durch den Gips können die Modelle in dem Artikulator befestigt werden.

Die DE 20 2007 004 119 U1 beschreibt eine Modellplatte für die Herstellung von Arbeitsmodellen in der Dentaltechnik, wobei die Modellplatte zweiteilig ausgebildet ist mit einer Primärplatte und einer Sekundärplatte, wobei die glatte Oberfläche der Primärplatte an deren Rückseite für den Aufbau und das Tragen eines Arbeitsmodells dient und eine zweite Oberfläche an der Sekundärplatte dazu dient, die Modellplatte in einem Artikulator anzuordnen. Bei diesem bekannten Verfahren erfolgt zunächst die Abformung des Patientengebisses mittels eines Abformlöffels, danach wird die Abformung mit Gips gefüllt und die Modellplatte wird auf die Abformung abgesenkt, so dass die Oberseite der Modellplatte in Kontakt mit dem Gips steht und nach der Aushärtung des Gipses das Kiefermodell mit der Modellplatte verbunden ist.

Ober- und Unterkiefer sind fest mit dem Ober- bzw. Unterteil des Artikulators verbunden. Für das Weiterarbeiten auf den Modellen müssen diese aber leicht aus dem Artikulator entnehmbar sein. Da aber eine mechanische Bindung zwischen dem Modell und dem Gips vorliegt ist dies nicht möglich. Oftmals wird nach dem Stand der Technik hierfür ein zweiter Gipssockel (Split-Platte) verwendet, welcher ebenfalls aus Gips hergestellt wird. Da die Kiefermodelle von Patient zu Patient unterschiedlich hoch sind, kann dies zu Platzproblemen im Artikulator führen.

Die DE 10 2011 057 029 A1 beschreibt ein Verfahren zur Herstellung von Dentalmodellen mit verbesserter Präzision und Benutzerfreundlichkeit. Es werdem digitalisierte Daten aus intraoralen Scans genutzt, um Dentalmodelle mit einer Basis zu erzeugen, die Referenzierungen enthält und somit eine genaue und fehlerfreie Einfügung in eine Trägerplatte oder Halterung gewährleistet.

Die am 13.10.2021 veröffentlichte Anmeldung EP 3 892 232 A1 beansprucht die Priorität vom 06.04.2020 und ist damit Stand der Technik gemäß Art. 54(3) EPÜ. Sie beschreibt ein additives Verfahren zur Herstellung eines dentalen Arbeitsmodells für einen Artikulator. Es wird der Prozess der additiven Fertigung einer Grundplatte und eines Dentalmodells beschrieben, die ohne den Einsatz von Magneten sicher miteinander verbunden werden können, indem Befestigungselemente und ein Splint zur positionssicheren Fixierung verwendet werden.

Die DE 10 2017 002 618 A1 beschreibt ein Verfahren und eine Vorrichtung zur Herstellung eines Systems für das Dentalmodellieren, das aus einem Zahnradmodell und einer Trägerplatte besteht. Hierbei werden digitale Technologien genutzt, darunter intraorales Scannen und CAD/CAM-Programme, um ein virtuelles Modell der Zähne eines Patienten zu erstellen, das dann verwendet wird, um ein physisches Zahnradmodell durch additives Fertigungsverfahren (3D-Druck) zu erzeugen und auszurichten.

Bei 3D-gedruckten Modellen gibt es bislang keine Möglichkeit einer Split-Platte und somit müssen die Modelle direkt in den Artikulator eingegipst werden. Das hat zur Folge, dass die Unterseite der Modelle mit Gips gefüllt sind und die Expansion des Gipses kann zu einem Verzug der Modelle führen.

Aufgabe der vorliegenden Erfindung ist es, ein einfaches und gleichzeitig zuverlässiges und genaues Verfahren zur Herstellung eines zur Montage in einen Artikulator bestimmten Modells für dentalmedizinische Zwecke zur Verfügung zu stellen, welches gegebenenfalls auch eine einfachere Entnahme einzelner Zahnstümpfe aus dem Modell ermöglicht.

Die Lösung dieser Aufgabe liefert ein Verfahren zur Herstellung eines zur Montage in einen Artikulator bestimmten Kiefermodells mit den Merkmalen des Anspruchs 1.

Erfindungsgemäß ist vorgesehen, dass die Daten für das Kiefermodell digital gewonnen werden und anhand dieser digitalen Daten anschließend das Kiefermodell im 3D-Druck hergestellt wird.

Gemäß einer bevorzugten Weiterbildung der Erfindung werden die Daten für das Kiefermodell mittels eines Intraoralscanners gewonnen, indem die Oberfläche einer Zahnreihe eines Patienten abgescannt wird und danach mittels einer geeigneten Software diese Daten in für einen 3D-Druck geeignete Daten umgewandelt werden.

Gemäß der Erfindung wird das Kiefermodell zusammen mit der Modellplatte im 3D-Druck hergestellt, so dass das Kiefermodell als mit der Modellplatte einstückiges Erzeugnis erhalten wird. Vorzugsweise werden die Modellplatte und das auf dieser befindliche Kiefermodell aus einem Kunststoff im 3D-Druck hergestellt.

Um die einzelnen Kiefermodelle (Unterkiefer und Oberkiefer) vom Gipssockel lösen zu können, werden erfindungsgemäß zwei Bauteile verwendet. Zum einen eine so genannte Modellplatte, welche fest mit den gedruckten Modellen in der Konstruktion verschmolzen wird und ein passendes Gegenstück, eine so genannte Artikulationsplatte, welche mit dem Gipssockel mit Gips verbunden wird. Beide Platten sind untereinander durch einen Formschluss, insbesondere durch Nut- und Federverbindungen, miteinander verzahnt, was eine eindeutige Repositionierung gewährleistet.

Die Verzahnung der beiden Platten erfolgt insbesondere nach dem Nut- und Federprinzip, wobei die Modellplatte die "Nut-Anteile" enthält. Die Nut ist an der Unterseite der Modellplatte und wurde zur besseren Verzahnung an mehreren, beispielsweise insgesamt fünf Stellen der Platte erzeugt. Nut und Feder sind quasi konisch gearbeitet und liefern so eine optimale Passung.

Damit eine trennbare Verbindung zwischen der Modellplatte und der Artikulationsplatte entsteht, wird vorzugsweise auf der Unterseite der Modellplatte eine ferro-magnetisierbare Metallplatte und auf der Unterseite der Artikulationsplatte ein Magnet befestigt. Die ferro-magnetisierbare Metallplatte wird auf der Unterseite entweder verklebt oder verschraubt, beide Variationen sind möglich.

Erfindungsgemäß ist ferner vorgesehen, dass die nach dem Verfahren hergestellte Modellplatte im Bereich ihrer Unterseite eine Wabenstruktur mit Öffnungen aufweist, so dass einzelne Zahnstümpfe von der Unterseite her aus der Modellplatte herausdrückbar sind. Da die einzelnen Zähne (Stümpfe) herausnehmbar gestaltet sein können und beispielsweise eine konische Stumpfform aufweisen können, müssen diese aus dem Modell lösbar sein. Aus diesem Grund hat die Modellplatte bevorzugt eine wabenähnliche/gitterähnliche Struktur. Durch die Gitteröffnungen lassen sich die einzelnen Stümpfe im Modell von der Unterseite aus dem Modell zu drücken.

Die vorgenannte wabenähnliche Struktur kann beispielsweise eine hexagonale Wabenstruktur aus untereinander verbundenen Sechsecken sein oder eine Wabenstruktur aus gleichseitigen Dreiecken oder eine Wabenstruktur aus Quadraten oder anderen beispielsweise polygonalen und gleichmäßigen Strukturen mit Verbindungsstegen, oder ähnlichen Strukturen, die eine hohe mechanische Stabilität der Modellplatte gewährleisten.

Die Oberseite der Artikulationsplatte weist ebenfalls mehrere Federn, beispielsweise fünf Federn auf und hat bevorzugt in der Mitte eine Vertiefung. Diese dient als Platzhalter für die ferromagnetische Metallplatte, welche an der Unterseite der Modellplatte verbunden ist. Der Platzhalter ist eine Vertiefung auf der Oberseite und entspricht der Dicke der Metallplatte.

Gemäß einer bevorzugten Weiterbildung der Erfindung wird die Artikulationsplatte aus einem thermoplastischen Kunststoff in einem kunststofftechnischen Verfahren hergestellt und wird mit einer strukturierten Unterseite, insbesondere einer wabenförmig strukturierten Unterseite versehen. Die Unterseite der Artikulationsplatte weist zum einen wabenförmige Vertiefungen auf, damit eine mechanische Verbindung zwischen Platte und Artikulator mittels Gips als Klebematerial geschaffen wird. Weiterhin ist eine Mulde in der Mitte für den Magnet erzeugt. Mittels des Magnets und der ferro-magnetisierbare Metallplatte, lassen sich die Einzelteile voneinander lösen, damit Arbeiten auf dem Zahnkranz möglich sind. Mulde (Unterseite) und Vertiefung (Oberseite) liegen übereinander und werden durch eine sehr schmale Zwischenwand voneinander getrennt.

Die Artikulationsplatte kann mit der Unterseite mittels Gips zusammen mit dem Kiefermodell samt Modellplatte eingerichtet, das heißt "einartikuliert" werden.

Ähnliche Verfahren, klassische Gipsmodelle in dem Artikulator zur fixieren und über ein doppeltes Plattensystem trennbar zu machen sind grundsätzlich aus dem Stand der Technik bekannt. Die Besonderheit bei der erfindungsgemäßen Lösung liegt aber in der Kombination aus einem als 3D-Modell gefertigten Zahnmodell (additiv oder subtraktiv), mit der mit dem Kiefermodell verbundenen "Modellplatte". Die Verzahnung zum Gegenstück (Artikulationsplatte) wird beim CAD-Design mit dem Kiefermodell "verschmolzen". Somit ist die Modellplatte und deren Bestandteil der Verzahnung mit dem Zahn/Kiefermodell verschmolzen und diese bilden eine Einheit. Dieses Verfahren ist bislang einzigartig.

Ebenfalls neuartig sind die Öffnungen in der Unterseite der Modellplatte, da diese die Entnahme der Zahnstümpfe aus dem Modell erleichtern.

Gegenstand einer besonders bevorzugten Variante der vorliegenden Erfindung ist somit ein Kiefermodell wenigstens eines der Zahnkränze (Oberkiefer/Unterkiefer) oder beider Zahnkränze, welches durch 3D-Druck konstruiert wurde mit einer Modellplatte, die Nuten enthält, mindestens zwei Nuten, in der Regel bis zu fünf Nuten. Die Nutengeometrie ist beliebig. Die Nuten müssen nur so gestaltet werden, dass sie das Zusammenschließen mit dem Federsystem einer Artikulationsplatte ohne Verzug und Verkantung ermöglichen. Das händische Trennen soll ebenfalls gewährleistet sein. Die Nutengeometrie kann beispielsweise kegelförmig, zylindrisch oder kugelkalottenförmig sein. Die Modellplatte ist auf der unteren Seite bevorzugt wabenförmig aufgebaut, so dass Zahnstümpfe, die im Kieferabdruck eingesetzt werden können, von unten her herausgedrückt werden können.

Gemäß einer besonders bevorzugten Variante der vorliegenden Erfindung werden der Zahnkranz und die Modellplatte in einem Schritt durch einen 3D-Druck mit einem organischen Polymersystem hergestellt. Die Daten für die Geometrie des Zahnkranzes können durch einen intraoralen Scan beim Zahnarzt gewonnen werden und papierlos über eine Datenleitung an das Dentallaboratorium übermittelt werden. Dort wird die Modellplatte datenmäßig an den Zahnkranz "angeheftet", d.h. konstruiert gestaltet. Eine entsprechend entwickelte Software wird hierfür eingesetzt. An die Modellplatte wird vorzugsweise eine ferro-magnetisierbare Scheibe mittig fest angeklebt.

Die Verbindung zwischen Modellplatte und dem Artikulator kann beispielsweise durch eine sogenannte Artikulationsplatte hergestellt werden, die auf der oberen Seite das Federsystem, passend zum Nutensystem der Modellplatte, besitzt. Die Artikulationsplatte besteht bevorzugt ebenfalls aus einem organischen Kunststoff, und kann zum Beispiel durch ein Spritzgussverfahren hergestellt werden (zum Beispiel mit thermoplastischem Kunststoff). Die wabenförmige Unterseite der Artikulationsplatte kann mit einem Klebstoff (z.B. Gips) mit dem Artikulator verbunden und fixiert werden.

Gegenstand der vorliegenden Erfindung ist weiterhin ein nach dem oben beschriebenen Verfahren hergestelltes Kiefermodell eines Patienten dem eine Modellplatte zugeordnet ist und eine mit der Modellplatte lösbar verbindbare Artikulationsplatte, wobei das Kiefermodell erfindungsgemäß verbunden mit der Modellplatte im 3D-Druck aus Kunststoff einstückig hergestellt ist und die Modellplatte eine Unterseite mit einer Wabenstruktur mit Öffnungen aufweist, so dass einzelne Zahnstümpfe von der Unterseite her aus der Modellplatte herausdrückbar sind.

Gemäß einer bevorzugten Weiterbildung der Erfindung sind einzelne Zahnstümpfe unterseitig mit einem Konus verbunden und in dem Kiefermodell und/oder der Modellplatte sind konische Öffnungen vorgesehen, in die der Konus passend einsetzbar ist. Auf diese Weise ergibt sich zwischen dem Konus, auf dem der Zahnstumpf sitzt und der Öffnung, in die der Konus einsetzbar ist, ein Formschluss, wobei zudem über den Konus eine genaue Positionierung des Zahnstumpfs in axialer Richtung in dem Kiefermodell bzw. der Modellplatte erfolgen kann.

Gemäß einer bevorzugten Weiterbildung der vorliegenden Erfindung sind die Modellplatte und die Artikulationsplatte über eine Magnet-Metall-Haftverbindung lösbar miteinander verbindbar, wobei eine ferromagnetische Metallplatte an der Unterseite der Modellplatte anbringbar ist und die Artikulationsplatte eine vorzugsweise etwa mittige Vertiefung an der Oberseite aufweist, in die die Metallplatte einsetzbar ist.

Vorzugsweise weist dabei die Artikulationsplatte ein mittiges Loch auf, welches vorzugsweise konzentrisch in der Vertiefung der Artikulationsplatte liegt. Dadurch ist eine Art Steg für die Aufnahme und Anlage der magnetischen Metallplatte gebildet, der verhindert, dass diese Metallplatte durch die Modellplatte gedrückt wird.

Vorzugsweise ist gemäß einer Weiterbildung der Erfindung die ferromagnetische Metallplatte an der Modellplatte über eine Schraube befestigbar, wozu die Modellplatte entweder ein Innengewinde aufweist, in das die Schraube einschraubbar ist oder eine selbstschneidende Schraube verwendet wird. Vorzugsweise verwendet man eine Schraube mit einem flachen Kopf, so dass die ferromagnetische Metallplatte versenkt werden kann und die Metallplatte und die Schraube plan miteinander abschließen.

Vorzugsweise weist gemäß einer Weiterbildung der Erfindung die Artikulationsplatte an ihrer Unterseite eine runde Ausnehmung auf, geeignet eine ferromagnetische Metallplatte oder eine Magnetplatte aufzunehmen, so dass Modellplatte und Artikulationsplatte jeweils über eine magnetische Verbindung lösbar miteinander verbindbar sind.

Eine bevorzugte Weiterbildung der vorliegenden Erfindung sieht vor, dass die Artikulationsplatte wenigstens eine angeformte Feder als Rotationsschutz in ihrem Randbereich aufweist, insbesondere eine etwa T-förmig geformte Feder an der etwa geradlinig verlaufenden Rückseite der Artikulationsplatte. Die T-förmige Geometrie ist vorteilhaft, wodurch sich die Artikulationspatte in verschiedene Pin-Bohrgeräte einspannen lässt.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine perspektivische Darstellung von Modellen eines Oberkiefers und eines Unterkiefers, die in einem Artikulator befestigt sind;
Figur 2 eine schematisch vereinfachte Seitenansicht eines gedruckten Modells eines Kiefers mit Modellplatte und Artikulationsplatte;
Figur 3 eine Ansicht der Unterseite einer Modellplatte;
Figur 4 eine Ansicht der Oberseite einer Artikulationsplatte;
Figur 5 eine Ansicht der Unterseite einer Artikulationsplatte;
Figur 6 eine Schnittansicht eines Vertikalschnitts durch eine Modellplatte mit darauf befindlichem Kiefermodell;
Figur 7 eine Ansicht auf die Unterseite einer Modellplatte gemäß einer alternativen Ausführungsvariante der vorliegenden Erfindung;
Figur 8 eine Ansicht auf die Oberseite einer Artikulationsplatte gemäß einer alternativen Ausführungsvariante der vorliegenden Erfindung;
Figur 9 eine Ansicht auf die Unterseite einer Artikulationsplatte gemäß einer alternativen Ausführungsvariante der vorliegenden Erfindung.

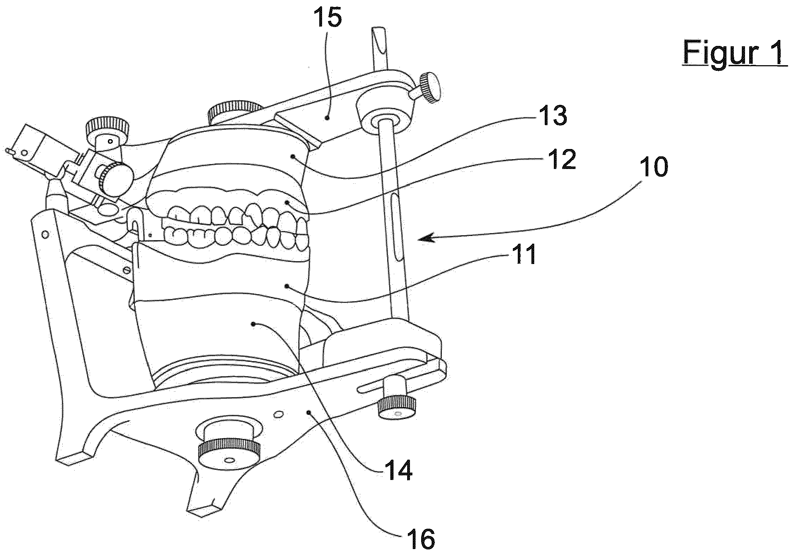

Nachfolgend wird zunächst auf die Figur 1 Bezug genommen und anhand dieser wird die Funktion eines herkömmlichen Artikulators 10, in den jeweils Modelle eines Unterkiefers und eines Oberkiefers eingesetzt sind, erläutert. Die Befestigung der beiden Kiefermodelle in dem Artikulator 10 dient dazu, Kaubewegungen und Kieferbewegungen des Patienten nachzustellen. Dazu wird das Unterkiefermodell 11 und das Oberkiefermodell 12 jeweils über einen Sockel 13, 14 aus Gips fest mit entsprechenden Platten 15, 16 des Artikulators 10 verbunden. Um die Modelle weiter bearbeiten zu können, müssen diese leicht aus dem Artikulator 10 entnehmbar sein. Dies ist aber bei herkömmlichen Lösungen nicht möglich, da eine mechanische Verbindung zwischen dem jeweiligen Kiefermodell 11, 12 und dem Gipssockel 13, 14 vorliegt. Diese Problematik wird durch die erfindungsgemäße Lösung überwunden.

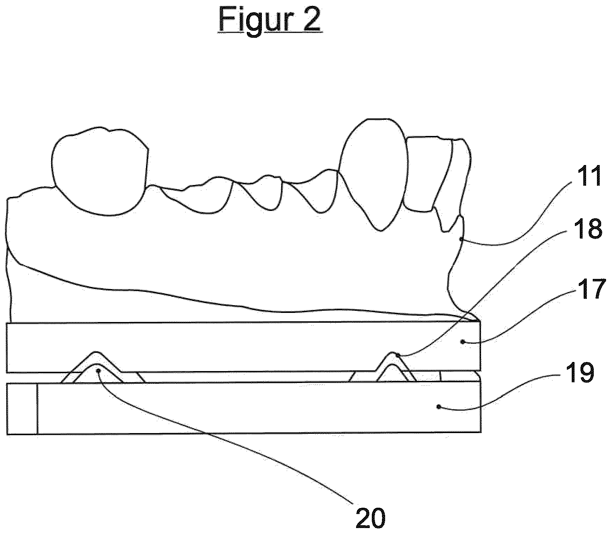

Dazu wird, wie in der Abbildung gemäß Figur 2 dargestellt ist, im 3D-Druck anhand von digitalen Daten ein Kiefermodell 11 aus Kunststoff gedruckt, und zwar einstückig mit einer Modellplatte 17, mit der das Kiefermodell 11 somit nach dem 3D-Druck einstückig verbunden ist. Diese Modellplatte 17 ist an ihrer Unterseite mit mehreren Nuten 18 versehen, die beispielsweise dachförmig ausgebildet sein können. Unterhalb der Modellplatte 17, auf der sich das Kiefermodell 11 befindet, ist eine zweite Platte, nämlich eine so genannte Artikulationsplatte 19 angeordnet, die an den entsprechenden Stellen Federn 20 aufweist, die so geformt sind, dass beim Aufeinandersetzen der beiden Platten 17, 19 eine lösbare formschlüssige Verbindung gegeben ist mit einer Art Verzahnung und optimaler Passung, so dass keine Relativbewegung der beiden Platten 17, 19 in ihrer Ebene möglich ist. Die Nuten 18 und Federn 20 sind dazu konisch gearbeitet. In Richtung senkrecht zur Ebene der beiden Platten 17, 19 ist deren Verbindung hingegen leicht lösbar.

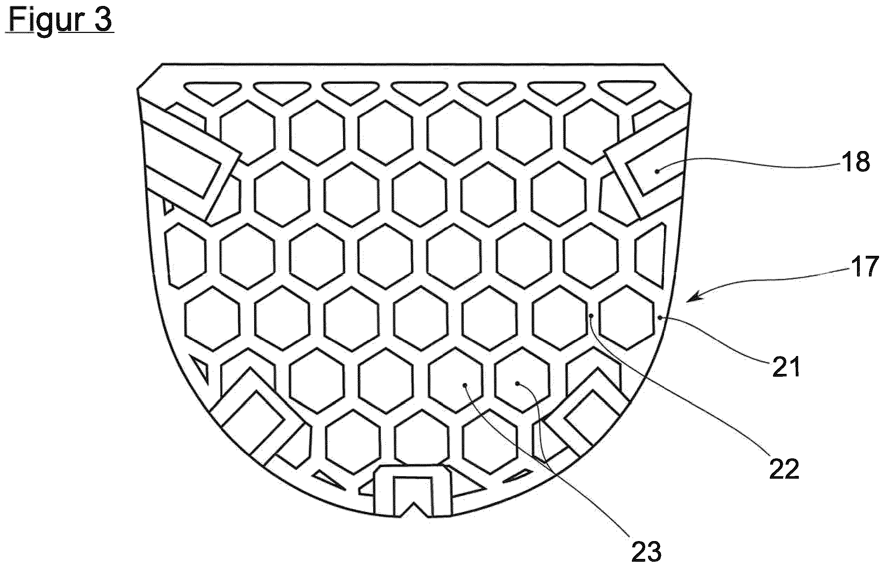

In Figur 3 ist eine Ansicht auf die Unterseite einer Modellplatte 17 dargestellt. Man erkennt hier, dass die Modellplatte 17 vorzugsweise in dem gesamten Bereich, der innerhalb des äußeren Randes 21 liegt, aus einer Vielzahl von miteinander verbundenen Stegen besteht, die sechseckige wabenförmige Strukturen 22 formen, wobei innerhalb der Waben jeweils sechseckige Öffnungen 23 liegen. Außerdem sind auf der Unterseite der Modellplatte 17 beispielsweise im Bereich des äußeren Randes 21 über den Umfang der Modellplatte 17 verteilt mehrere Nuten 18 der oben beschriebenen Art für die Verbindung mit der Artikulationsplatte vorgesehen.

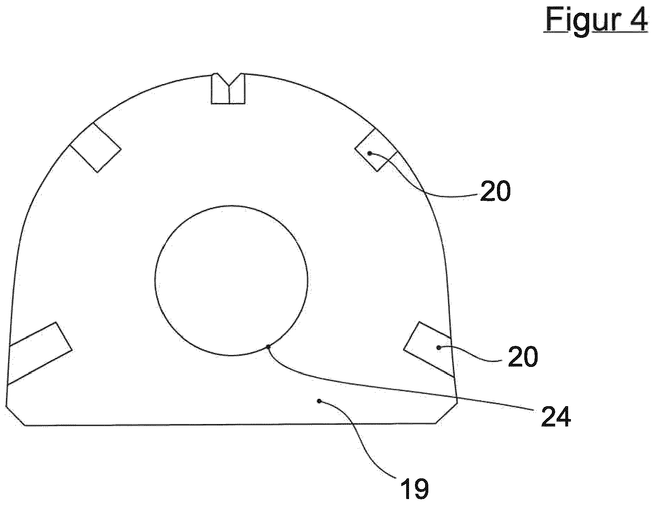

Eine Ansicht auf die Oberseite einer Artikulationsplatte 19 ist in der Figur 4 dargestellt. Man erkennt, dass diese in ihrer Mitte eine runde Vertiefung 24 aufweist, in der eine ferromagnetisierbare Metallplatte aufgenommen werden kann, die sich an der Unterseite der Modellplatte 17 befindet, so dass man über einen Magneten an der Unterseite der Artikulationsplatte 19 eine magnetische Verbindung zwischen den beiden Platten 17, 19 herstellen kann. Diese magnetische Verbindung der beiden Platten 17, 19 ist an sich bekannt. Man erkennt in der Figur 4 außerdem die Federn 20 im äußeren Randbereich, die über den Umfang der Artikulationsplatte 19 verteilt angeordnet sind und jeweils dazu dienen, die Nuten 18 der Modellplatte 17 formschlüssig aufzunehmen.

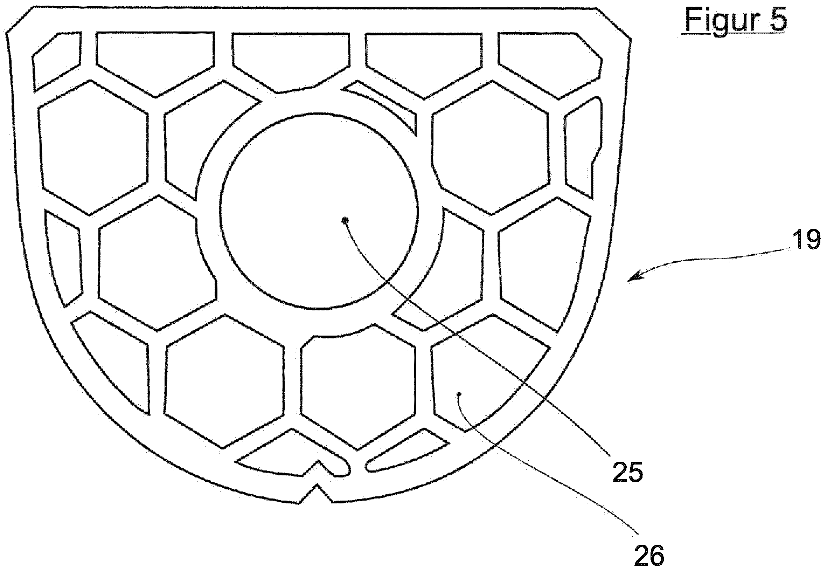

In Figur 5 ist eine Ansicht auf die Unterseite der Artikulationsplatte 19 dargestellt. Man erkennt, dass diese an der Unterseite eine mittige Vertiefung 25 aufweist für die Aufnahme eines Magneten. Außerdem hat die Artikulationsplatte 19 an ihrer Unterseite eine Struktur mit beispielsweise einer Anzahl von wabenförmigen Vertiefungen 26, die jedoch nicht durch das Material der Artikulationsplatte 19 durchgehen, also keine durchgehenden Öffnungen darstellen, anders als zuvor bei der Modellplatte 17 beschrieben. Diese Vertiefungen 26 dienen dazu, den Gips aufzunehmen und so eine bessere Verbindung mit dem Artikulator 10 zu schaffen, in dem die Anordnung mit der Artikulationsplatte 19 befestigt wird. Der Gips oder alternativ auch ein Klebstoff setzt sich dann in diese Vertiefungen 26.

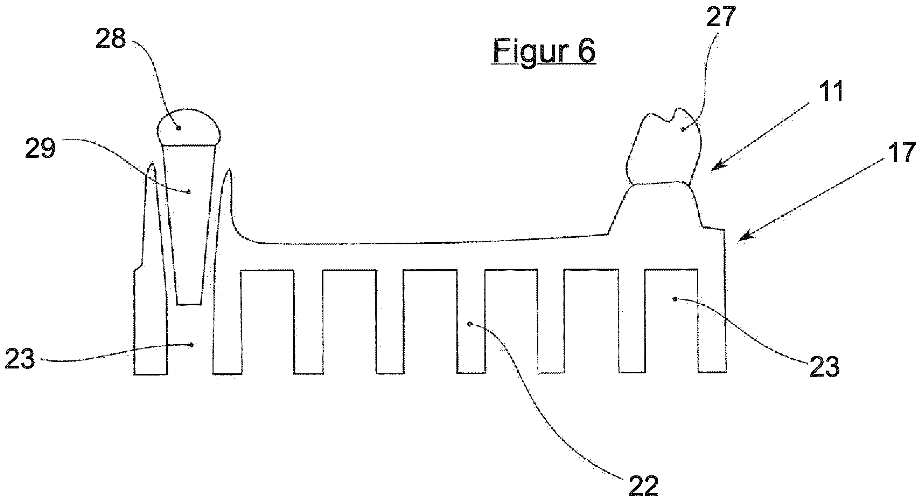

Nachfolgend wird unter Bezugnahme auf die Figur 6 eine Schnittansicht eines Vertikalschnitts durch eine Modellplatte 17 mit darauf befindlichem Kiefermodell 11 näher beschrieben. Man erkennt hier die wabenförmigen Strukturen 22 mit den Stegen, zwischen denen jeweils die Öffnungen 23 liegt. Weiterhin ist schematisch im rechten Bereich der Zeichnung ein Zahnstumpf 27 des Kiefermodells 11 eines Unterkiefers eingezeichnet. Im linken Bereich der Zeichnung ist der Längsschnitt so gelegt, dass durch eine der Öffnungen 23 geschnitten ist, die wie man sieht nach oben hin offen ist. Ein weiterer Zahnstumpf 28 sitzt auf einem Konus 29, welcher in die sich nach unten hin konisch verjüngende Öffnung 23 eingesetzt ist. Wenn man daher einen einzelnen Zahnstumpf 28 aus dem Kiefermodell 11, welches einstückig mit der Modellplatte 17 ausgebildet ist, lösen möchte, genügt es, wenn man von unten her durch die Öffnung 23 diesen Zahnstumpf 28 nach oben hin herausdrückt.

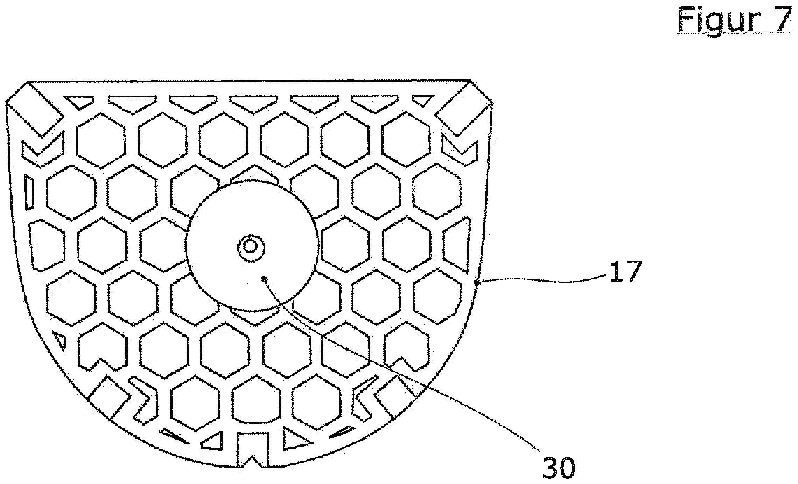

Nachfolgend wird unter Bezugnahme auf die Figuren 7 bis 9 ein alternatives Ausführungsbeispiel der vorliegenden Erfindung näher erläutert. Figur 7 zeigt die Ansicht auf die Unterseite einer alternativen Modellplatte 17. In Abweichung zu dem oben beschriebenen Beispiel gemäß Figur 3, ist bei der Variante gemäß Figur 7 die Möglichkeit geschaffen, eine ferromagnetische Metallplatte 30 direkt mit der Modellplatte 17 zu verschrauben. Dazu wird bei der Herstellung beispielsweise im 3D-Druck im mittleren Bereich der Modellplatte 17 ein Platzhalter in Form eines Zylinders (Hohlraums) mit einem Innengewinde erzeugt, so dass sich nach der Herstellung der Modellplatte im 3D-Druck in diesen Zylinder eine magnetische Metallplatte 30 einschrauben lässt. Diese Schraubverbindung zwischen der ferromagnetischen Metallplatte 30 und der Modellplatte 17 ist noch beständiger als beispielsweise eine Klebeverbindung, wie sie bei der ersten Variante vorgesehen ist, die oben unter Bezugnahme auf die Figur 3 beschrieben wurde. Die feste Verschraubung kann insbesondere mittels einer gegen Leitungswasser korrosionsbeständigen Schraube erfolgen. Es kann beispielsweise eine selbstschneidende Schraube verwendet werden, die verhältnismäßig klein sein kann. Beispielsweise könnte man Schrauben mit einer Größe von vorzugsweise etwa 2 mm bis 6 mm verwenden. Die ferromagnetische Metallplatte 30 ist mit einer entsprechenden Bohrung versehen. Der Schraubenkopf dieser Schraube ist vorteilhaft flach (Senkkopf), so dass die ferro-magnetische Metallplatte 30 versenkt werden kann, damit die Metallplatte 30 und die Schraube plan miteinander abschließen.

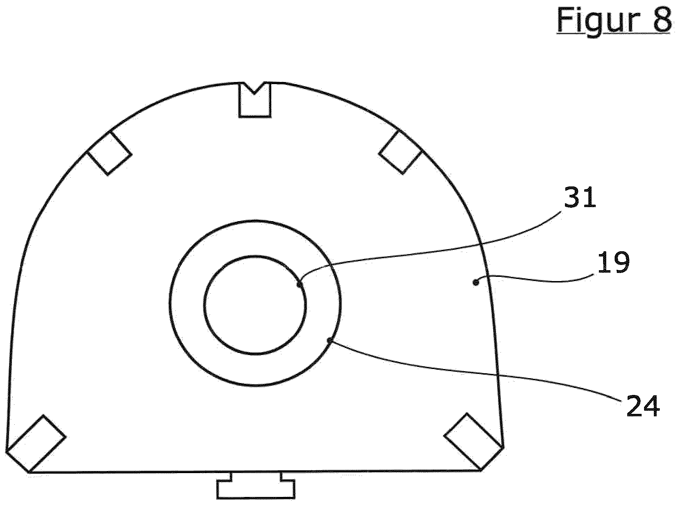

Figur 8 zeigt die Ansicht auf die Oberseite der Artikulationsplatte 19 bei der alternativen Ausführungsvariante, wobei in Abweichung zu der Variante von Figur 4 die Artikulationsplatte 19 von Figur 8 zusätzlich zu der runden mittigen Vertiefung 24 ein in dieser Vertiefung konzentrisch angeordnetes rundes Loch 31 aufweist. Dadurch ist quasi ein Steg für einen Magneten oder eine Metallplatte gebildet, der als Rückhalteelement dient und durch den verhindert wird, dass der Magnet oder die Metallplatte durch die Artikulationsplatte 19 gedrückt wird.

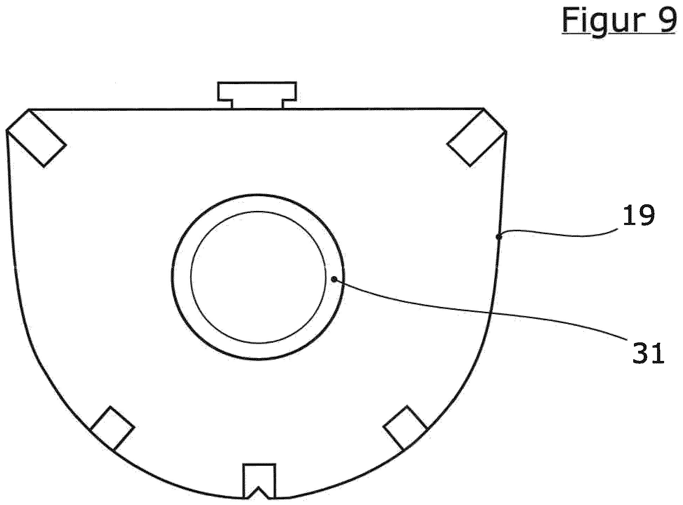

Die Figur 9 zeigt die Ansicht auf die Unterseite der Artikulationsplatte 19 gemäß der alternativen Ausführungsvariante, wobei in Abweichung zu der Variante von Figur 5 bei der Variante gemäß Figur 9 keine Wabenstruktur an der Unterseite der Artikulationsplatte 19 vorgesehen ist. An der Unterseite ist bei dieser Variante der Artikulationsplatte 19 in einem Randbereich wenigstens eine angeformte etwa T-förmige Feder 33 vorgesehen, die beim Eingipsen der Artikulationsplatte 19 als Rotationsschutz dienen. Auf der Unterseite der Artikulationsplatte 19, die bei der Variante von Figur 9 glatt ist (ohne Wabenstruktur), kann ebenfalls eine runde Ausnehmung 32 vorgesehen sein, in die eine ferromagnetische Metallplatte oder eine Magnetplatte eingesetzt werden kann, so dass es möglich ist, die Artikulationsplatte aus dem Gipssockel zu Lösen.

### Bezugszeichenliste

- 10: Artikulator
- 11: Kiefermodell, Unterkiefermodell
- 12: Oberkiefermodell
- 13: Sockel aus Gips
- 14: Sockel aus Gips
- 15: Platte des Artikulators
- 16: Platte des Artikulators
- 17: Modellplatte
- 18: Nuten
- 19: Artikulationsplatte
- 20: Federn
- 21: äußerer Rand
- 22: wabenförmige Strukturen
- 23: sechseckige Öffnungen
- 24: runde Vertiefung
- 25: mittige runde Vertiefung
- 26: wabenförmige Vertiefungen, Strukturen
- 27: Zahnstumpf
- 28: Zahnstumpf
- 29: Konus
- 30: magnetische Metallplatte
- 31: rundes Loch
- 32: runde Ausnehmung
- 33: Feder

## Patentansprüche

1. Verfahren zur Herstellung eines zur Montage in einen Artikulator bestimmten Kiefermodells (11, 12) eines Patienten, umfassend die Herstellung wenigstens eines Kiefermodells, wenigstens einer diesem Kiefermodell (11, 12) zugeordneten Modellplatte (17) sowie wenigstens einer mit der Modellplatte (17) lösbar verbindbaren, in etwa paralleler Anordnung zur Modellplatte (17) anzuordnenden Artikulationsplatte (19), die in einen Artikulator (10) einsetzbar und mit diesem verbindbar ist, wobei Modellplatte (17) und Artikulationsplatte (19) durch eine formschlüssige Verbindung gegenseitig fixierbar sind,
wobei die Daten für das Kiefermodell (11) digital gewonnen werden und anhand dieser digitalen Daten anschließend das Kiefermodell (11) verbunden mit der Modellplatte (17) im 3D-Druck aus Kunststoff einstückig hergestellt wird, und
die nach dem Verfahren hergestellte Modellplatte (17) im Bereich ihrer Unterseite eine Wabenstruktur (22) mit Öffnungen (23) aufweist, so dass einzelne herausnehmbar gestaltete Zahnstümpfe von der Unterseite her aus der Modellplatte (17) herausdrückbar sind.

2. Verfahren nach Anspruch 1, **dadurch gekennzeichnet, dass** die Daten für das Kiefermodell (11, 12) mittels eines Intraoralscanners gewonnenen werden, indem die Oberfläche einer Zahnreihe (10) eines Patienten abgescannt wird und danach mittels einer geeigneten Software diese Daten in für einen 3D-Druck geeignete Daten umgewandelt werden.

3. Verfahren nach einem der Ansprüche 1 oder 2, **dadurch gekennzeichnet, dass** die Artikulationsplatte (19) aus einem thermoplastischen Kunststoff in einem kunststofftechnischen Verfahren hergestellt wird und mit einer strukturierten Unterseite, insbesondere einer wabenförmig strukturierten Unterseite (26) versehen wird.

4. Nach einem Verfahren gemäß einem der Ansprüche 1 bis 3 hergestelltes Kiefermodell (11, 12) eines Patienten mit einer diesem Kiefermodell zugeordneten Modellplatte (17) und einer mit der Modellplatte lösbar verbindbaren Artikulationsplatte (19), **dadurch gekennzeichnet, dass** das Kiefermodell (11, 12) verbunden mit der Modellplatte (17) im 3D-Druck aus Kunststoff einstückig hergestellt ist, und
die Modellplatte (17) eine Unterseite mit einer Wabenstruktur (22) mit Öffnungen (23) aufweist, so dass einzelne herausnehmbar gestaltete Zahnstümpfe von der Unterseite her aus der Modellplatte (17) herausdrückbar sind.

5. Kiefermodell nach Anspruch 4, **dadurch gekennzeichnet, dass** die einzelnen herausnehmbar gestalteten Zahnstümpfe (27, 28) unterseitig mit einem Konus (29) verbunden sind und in dem Kiefermodell (11, 12) und/oder der Modellplatte (17) konische Öffnungen (23) vorgesehen sind, in die der Konus (29) passend einsetzbar ist.

6. Kiefermodell (11, 12) nach einem der Ansprüche 4 oder 5, **dadurch gekennzeichnet, dass** die Modellplatte (17) und die Artikulationsplatte (19) über eine Magnet-Metall-Haftverbindung lösbar miteinander verbindbar sind, wobei eine ferromagnetische Metallplatte an der Unterseite der Modellplatte (17) anbringbar ist und die Artikulationsplatte (19) eine vorzugsweise etwa mittige Vertiefung (24) an der Oberseite aufweist, in die die Metallplatte (30) einsetzbar ist.

7. Kiefermodell (11, 12) nach Anspruch 6, **dadurch gekennzeichnet, dass** die Artikulationsplatte (19) ein mittiges Loch (31) aufweist, welches vorzugsweise konzentrisch in der Vertiefung (24) der Artikulationsplatte (19) liegt.

8. Kiefermodell (11, 12) nach einem der Ansprüche 6 oder 7, **dadurch gekennzeichnet, dass** die ferromagnetische Metallplatte an der Modellplatte (17) über eine Schraube befestigbar ist, wozu die Modellplatte (17) entweder ein Innengewinde aufweist, in das die Schraube einschraubbar ist oder eine selbstschneidende Schraube verwendet wird.

9. Kiefermodell nach einem der Ansprüche 6 bis 8, **dadurch gekennzeichnet, dass** die Artikulationsplatte (19) an ihrer Unterseite eine runde Ausnehmung (32) aufweist, geeignet eine ferromagnetische Metallplatte aufzunehmen.

10. Kiefermodell nach einem der Ansprüche 4 bis 9, **dadurch gekennzeichnet, dass** die Artikulationsplatte (19) wenigstens eine angeformte Feder (33) als Rotationsschutz in ihrem Randbereich aufweist, insbesondere eine etwa T-förmig geformte Feder.

## Claims

1. A method for producing a jaw model (11, 12) of a patient intended for mounting in an articulator, with said method comprising the production of at least one jaw model, at least one model plate (17) assigned to this jaw model (11, 12) and at least one articulation plate (19) that can be separably connected to the model plate (17) and is to be arranged approximately parallel to the model plate (17), wherein said articulation plate can be inserted into an articulator (10) and connected thereto, wherein the model plate (17) and the articulation plate (19) can be fixed in relation to one another by means of a positive connection,
wherein the data for the jaw model (11) is obtained digitally and the jaw model (11) is then produced from plastic in one piece together with the model plate (17) by means of 3D printing based on this digital data, and wherein
the model plate (17) produced in accordance with this method has in the region of its underside a honeycomb structure (22) with openings (23) such that individual removable tooth stumps can be pressed out of the model plate (17) from the underside.

2. The method according to claim 1, **characterized in that** the data for the jaw model (11, 12) is obtained by means of an intraoral scanner **in that** the surface of a row of teeth (10) of a patient is scanned and this data is subsequently converted into data suitable for 3D printing by means of suitable software.

3. The method according to one of claims 1 or 2, **characterized in that** the articulation plate (19) is produced from a thermoplastic in a plastics technology process and provided with a structured underside, particularly an underside (26) structured in a honeycombed manner.

4. A jaw model (11, 12) of a patient produced with a method according to one of claims 1 to 3, comprising a model plate (17) assigned to this jaw model and an articulation plate (19) that can be separably connected to the model plate, **characterized in that** the jaw model (11, 12) is produced from plastic in one piece together with the model plate (17) by means of 3D printing, and **in that**
the model plate (17) has an underside with a honeycomb structure (22) with openings (23) such that individual removable tooth stumps can be pressed out of the model plate (17) from the underside.

5. The jaw model according to claim 4, **characterized in that** the individual removable tooth stumps (27, 28) are on their underside connected to a cone (29), and **in that** conical openings (23), into which the cone (29) can be fittingly inserted, are provided in the jaw model (11, 12) and/or the model plate (17).

6. The jaw model (11, 12) according to one of claims 4 or 5, **characterized in that** the model plate (17) and the articulation plate (19) can be separably connected to one another by means of a magnet-metal connection, wherein a ferromagnetic metal plate can be attached to the underside of the model plate (17) and the articulation plate (19) has on its upper side a preferably approximately central depression (24), into which the metal plate (30) can be inserted.

7. The jaw model (11, 12) according to claim 6, **characterized in that** the articulation plate (19) has a central hole (31), which preferably lies concentrically in the depression (24) of the articulation plate (19).

8. The jaw model (11, 12) according to one of claims 6 or 7, **characterized in that** the ferromagnetic metal plate can be fastened on the model plate (17) by means of a screw, wherein the model plate (17) either has an internal thread, into which the screw can be screwed, or a self-tapping screw is used.

9. The jaw model according to one of claims 6 to 8, **characterized in that** the articulation plate (19) has on its underside a round recess (32) suitable for receiving a ferromagnetic metal plate.

10. The jaw model according to one of claims 4 to 9, **characterized in that** the articulation plate (19) has in its edge region an anti-rotation lock in the form of a spring (33), particularly an approximately T-shaped spring, which is integrally formed on the articulation plate.

## Revendications

1. Procédé de fabrication d'un modèle de mâchoire (11, 12) d'un patient, destiné à être monté dans un articulateur, comprenant la fabrication d'au moins un modèle de mâchoire, d'au moins une plaque-modèle (17), associée audit modèle de mâchoire (11, 12), ainsi que d'au moins une plaque d'articulation (19), susceptible d'être assemblée de manière amovible avec ladite plaque-modèle (17), qui doit être placée en disposition approximativement parallèle par rapport à la plaque-modèle (17), qui est insérable dans un articulateur (10) et susceptible d'être assemblée avec celui-ci, la plaque-modèle (17) et la plaque d'articulation (19) étant susceptibles d'être fixées réciproquement, par un assemblage par complémentarité de forme,
les données pour le modèle de mâchoire (11) étant obtenues par voie numérique et à l'aide desdites données numériques, par la suite, le modèle de mâchoire (11), assemblé avec la plaque-modèle (17) étant fabriqué en monobloc en matière plastique, par impression en 3 D et
dans la zone de sa face inférieure, la plaque-modèle (17) fabriquée d'après le procédé comportant une structure alvéolaire (22) dotée d'orifices (23), de telle sorte que des moignons dentaires conçus sous forme extractible puissent être poussés à partir de la face inférieure hors de la plaque-modèle (17).

2. Procédé selon la revendication 1, **caractérisé en ce que** les données pour le modèle de mâchoire (11, 12) sont obtenues par un scanner intraoral, **en ce que** la surface d'une rangée de dents (10) d'un patient est scannée et qu'ensuite, à l'aide d'un logiciel adapté, lesdites données sont transformées en données adaptées pour une impression en 3 D.

3. Procédé selon l'une quelconque des revendications 1 ou 2, **caractérisé en ce que** la plaque d'articulation (19) est fabriquée en une matière thermoplastique, dans un procédé technoplastique et est munie d'une face inférieure structurée, notamment d'une face inférieure (26) alvéolaire structurée.

4. Modèle de mâchoire (11, 12) d'un patient, fabriqué d'après un procédé selon l'une quelconque des revendications 1 à 3 à l'aide d'une plaque-modèle (17) associée audit modèle de mâchoire et d'une plaque d'articulation (19) susceptible d'être assemblée de manière amovible avec la plaque-modèle, **caractérisé en ce que** le modèle de mâchoire (11, 12) assemblé avec la plaque-modèle (17) est fabriqué en matière plastique, en monobloc en impression en 3 D,
la plaque-modèle (17) comporte une face inférieure dotée d'une structure alvéolaire (22) dotée d'orifices (23), de sorte que des moignons dentaires individuels, conçus sous forme extractible puissent être poussés à partir de la face inférieure hors de la plaque-modèle (17).

5. Modèle de mâchoire selon la revendication 4, **caractérisé en ce que** les moignons dentaires (27, 28) individuels, conçus sous forme extractible sont assemblés sur leur face extérieure avec un cône (29) et **en ce que** dans le modèle de mâchoire (11, 12) et/ou dans la plaque-modèle (17) sont prévus des orifices (23) coniques, dans lesquels le côné (29) est insérable de manière ajustée.

6. Modèle de mâchoire (11, 12) selon l'une quelconque des revendications 4 ou 5, **caractérisé en ce que** la plaque-modèle (17) et la plaque d'articulation (19) sont susceptibles d'être assemblées de manière amovible l'une avec l'autre, par l'intermédiaire d'un assemblage par adhérence aimant/métal, une plaque magnétique ferromagnétique étant susceptible d'être montée sur la face inférieure de la plaque-modèle (17) et la plaque d'articulation (19) comportant sur sa face supérieure un renfoncement (24), de préférence approximativement central, dans lequel la plaque métallique (30) est insérable.

7. Modèle de mâchoire (11, 12) selon la revendication 6, **caractérisé en ce que** la plaque d'articulation (19) comporte un trou (31) central, lequel se situe de préférence de manière concentrique dans le renfoncement (24) de la plaque d'articulation (19).

8. Modèle de mâchoire (11, 12) selon l'une quelconque des revendications 6 ou 7, **caractérisé en ce que** la plaque métallique ferromagnétique est susceptible d'être fixée sur la plaque-modèle (17) par l'intermédiaire d'une vis, à quelle fin, la plaque-modèle (17) comporte soit un taraudage, dans laquelle la vis peut être vissée ou l'on utilise une vis autotaraudeuse.

9. Modèle de mâchoire selon l'une quelconque des revendications 6 à 8, **caractérisé en ce que** la plaque d'articulation (19) comporte sur sa face inférieure un évidement (32) rond, adapté pour recevoir une plaque métallique ferromagnétique.

10. Modèle de mâchoire selon l'une quelconque des revendications 4 à 9, **caractérisé en ce que** la plaque d'articulation (19) comporte au moins un ressort (33) rapporté, en tant que protection anti-rotation dans sa zone de bordure, notamment un ressort façonné approximativement en forme de T.
